# FASCICULE DE BREVET EUROPEEN

(11) **EP 2 280 865 B1**
(45) Date de publication et mention de la délivrance du brevet: **07.03.2012**
(21) Numéro de dépôt: 09745912.7
(22) Date de dépôt: 29.04.2009
(51) Int. Cl.: B64C 1/18, B64F 5/00

(54) **PROCEDE DE FIXATION D'UN MODULE DE PLANCHER D'AERONEF**
VERFAHREN ZUR BEFESTIGUNG EINES BODENMODULS EINES FLUGZEUGES
METHOD FOR ATTACHING AN AIRCRAFT FLOOR MODULE

(30) Priorité: 29.04.2008 FR 0852896
(43) Date de publication de la demande: 09.02.2011
(73) Titulaire: Airbus Operations, 31060 Toulouse (FR)
(72) Inventeur: DEPEIGE, Alain, F-31170 Tournefeuille (FR); RIVAUD, Christian, F-31200 Toulouse (FR)
(74) Mandataire: Le Tourneau, Augustin
(86) Numéro de dépôt international: PCT/FR2009/000508
(87) Numéro de publication internationale: WO 2009/138593

(56) Documents cités:
- FR-A- 2 872 780
- FR-A- 2 872 781
- FR-A- 2 872 782

## Description

La présente invention se rapporte à l'aménagement d'un aéronef par la pose d'un plancher, en particulier dans le cockpit d'un aéronef. L'invention concerne plus particulièrement un procédé d'aménagement d'aéronef et un tel aéronef.

De façon classique, les planchers de cabine ou du cockpit d'un aéronef sont directement intégrés à la structure constituant son fuselage au cours de la construction de celle-ci, notamment le fuselage avant pour le plancher de cockpit. Des exemples d'intégration de ces planchers sont fournis dans les documents de brevet FR2689851, FR2872780, FR2872781, FR2900125 et FR2872782, qui répresente l'art antérieur le plus proche.

En pratique, au fur et à mesure de la construction du fuselage de l'aéronef, des traverses pour former une structure de plancher sont fixées sur les cadres du fuselage local. Puis, des poutres longitudinales ou longerons assurant la stabilité de ces traverses et la transmission d'efforts longitudinaux, notamment en cas d'atterrissage forcé, sont amenées et fixées aux traverses. L'ensemble de ces traverses et longerons forment la structure de plancher, laquelle peut alors être recouverte d'éléments de finition tels que des voiles de rigidification reprenant à la fois les traverses et certains voiles longitudinaux pour constituer des structures caissonnées ou semi-caissonnées. Des panneaux démontables et des platines de reprises des sièges sont ensuite déposés sur la structure.

Dans la demande FR2872782, la structure de plancher est prévue pour être directement fixées sur les cadres du fuselage, par superposition du cadre avec les extrémités des traverses. Ainsi, les traverses sont plus larges que la distance séparant les parties opposées d'un même cadre, ce qui empêche toute manipulation aisée de la structure de plancher à l'intérieur du fuselage.

Dans le cas de l'A380 (nom commercial), la procédure diffère quelque peu en ce que la construction du fuselage est entreprise à partir d'un module structurel de plancher déjà élaboré, par exemple de cockpit. Le fuselage est donc monté progressivement tout autour de ce module.

De façon classique, les planchers sont montés généralement sensiblement à mi-hauteur du fuselage, légèrement sous le plan diamétral horizontal du fuselage.

Ces planchers ou structures de plancher peuvent constituer une gêne lorsqu'un s'agit de construire le reste du fuselage, en interdisant par exemple l'introduction d'outillages volumineux dans le corps de l'aéronef en construction.

L'invention vise à pallier l'un des inconvénients de l'art antérieur.

A cet effet, l'invention concerne notamment un procédé d'aménagement d'un aéronef, tel que défini par les caractéristiques techniques de la revendication 1, l'aéronef comprenant une partie de fuselage formée au moins de cadres et de lisses horizontales, et définissant un volume intérieur dudit aéronef et comprenant au moins une structure de bord interne, ladite structure de bord étant rendue solidaire de ladite partie de fuselage et étant adaptée à recevoir un module de plancher, le procédé comprenant une étape d'introduction du module de plancher à l'intérieur dudit volume et une étape de fixation du module de plancher à ladite structure de bord.

Le module de plancher peut être réduit à une simple structure dépourvue d'habillage.

Grâce à l'invention, la structure de bord constitue des moyens de fixation disponibles pour recevoir un plancher à fixer. On peut en conséquence procéder à l'intégration du module de plancher à tout instant pendant le processus de conception du fuselage, notamment après réalisation avancée du fuselage local prévu autour du plancher et de son aménagement. L'invention permet ainsi de simplifier le mécanisme de construction et d'assemblage des aéronefs.

En outre, cette structure de bord venant au surplus du fuselage permet de réduire la largeur du module de plancher à insérer. Ainsi, le ratio entre la dimension du module de plancher et l'espace intérieur dans le fuselage est réduit pour une meilleure manipulation du plancher à l'intérieur du volume, par exemple lors de son insertion.

Pour l'invention, on entend par "fuselage" une structure de base de l'enveloppe d'un aéronef qui définit un volume intérieur de cet aéronef. Cette structure peut être d'une composition minimaliste réalisée à partir de cadres et/ou de lisses et/ou de panneaux constituant une peau. Le volume ainsi définit ne correspond pas nécessairement au volume total de l'aéronef fini, mais peut représenter une section seulement, notamment celle dans laquelle est intégré le module de plancher selon l'invention.

Généralement, les structures de tels planchers de l'art antérieur épousent la forme des fuselages de l'aéronef. En tenant compte des formes de pointe avant différentes d'un aéronef à l'autre, ces planchers sont alors différents pour chaque aéronef, et ce alors même que les règles d'ergonomie qui président au positionnement des membres d'équipage et de leur environnement (appareillage, siège, palonnier par exemple) sont peu variables. Par exemple, la distance latérale entre deux pilotes côte à côte doit permettre un accès simultané des deux membres d'équipage aux commandes de gaz des moteurs, ainsi qu'à certaines commandes de surfaces mobiles (becs, volets, compensateurs, aérofreins, etc). De même la distance de l'oeil du pilote à la planche d'instruments de bord, l'inclinaison de cette planche, la position des organes principaux de pilotage, manche et palonnier/freins relève de normes d'ergonomie regroupant un éventail de taille de pilotes (en général 1.57 m à 1.95 m).

Dans ce contexte, l'invention permet d'utiliser aisément un même module de plancher constituant la zone centrale "invariante" souhaitée pour différents aéronefs. L'invention s'applique aussi bien pour un plancher de cockpit prévoyant des emplacements classiques des sièges de pilote et instruments que pour un plancher de cabine éventuellement pré-équipée de rails à géométrie constante d'un aéronef à l'autre et/ou de systèmes et câbles.

On prévoit alors que ledit module de plancher a des dimensions prédéfinies et ladite structure de bord est mise à dimension de sorte à occuper l'espace laissé libre entre ladite partie de fuselage et le module de plancher dans sa position de fixation. En mutualisant ces modules pour divers types d'aéronefs, on diminue les coûts de développement et d'outillage pour l'intégration et l'entretien de planchers dans un aéronef.

Dans un mode de réalisation, ledit module de plancher et la structure de bord sont agencés pour former, en position de fixation, une surface supérieure sensiblement plane. On optimise ainsi la surface utilisable, c'est-à-dire la surface au sol, soit dans le cockpit soit dans la cabine. On note alors que la structure de bord vise à occuper l'espace laissé libre entre le module de plancher apporté et le fuselage. Dans ce cas, on envisage des moyens de fixation prévus dans l'épaisseur du module de plancher et dans l'épaisseur correspondante de la structure de bord.

Plusieurs modes d'introduction du module de plancher dans l'aéronef peuvent être envisagés.

Dans l'un de ceux-ci, le module de plancher est introduit horizontalement par translation de sorte à amener au moins un moyen de fixation prévu sur le module de plancher à l'aplomb d'un moyen de fixation correspondant prévu sur la structure de bord, puis le module de plancher est déplacé selon l'axe vertical de sorte à faire coopérer lesdits moyens de fixation. La translation peut être notamment effectuée dans le sens longitudinal de l'aéronef, par exemple depuis l'arrière de l'aéronef dont le fuselage n'aura pas encore été fermé ou fini. En particulier, la structure de bord étant légèrement sous le plan diamétral horizontal du fuselage, on introduit le module de plancher au dessus de la structure de bord, sensiblement au niveau de ladite mi-hauteur là où le fuselage est le plus large.

Ce mode d'introduction est privilégié lorsque les moyens de fixation sont proéminents, soit sur le module de plancher, soit sur la structure de bord, de telle sorte qu'il n'est pas envisageable de glisser directement le module de plancher par translation à la même hauteur (c'est-à-dire dans le même plan) que la structure de bord.

Un exemple de tels moyens de fixation comprend une chape à oeil.

En particulier, on prévoit que ledit moyen de fixation prévu sur le module de plancher comprend une ferrure à chape disposée à l'intérieur d'une traverse formant une structure du module, en l'extrémité de ladite traverse, et ledit moyen de fixation prévu sur la structure de bord comprend une ferrure à chape apte à coopérer avec ladite chape de la structure de plancher. En pratique, on utilise d'un côté une chape à oeil(s) femelle et de l'autre une chape à oeil(s) mâle coopérant par montage serré de bagues ou entretoises. Le déplacement du module de plancher selon l'axe vertical permet ainsi d'engager une chape dans l'autre, alors que celles-ci sont positionnées verticalement afin de reprendre les efforts selon l'axe longitudinal de l'aéronef.

En alternative, les chapes peuvent être intégrées directement à la structure du module de plancher.

On note que de tels moyens de fixation à chapes peuvent être utilisés en combinaison avec d'autres mécanismes d'introduction du module dans l'aéronef.

En particulier, on prévoit que lesdites ferrures comprennent deux chapes symétriques par rapport à un plan médian de symétrie des ferrures. Grâce à ces dispositions, ces ferrures peuvent être utilisées aussi bien sur une partie droite qu'une partie gauche de la structure de plancher et/ou de la structure de bord. Les coûts de développement correspondant sont ainsi réduits. En outre, les doubles chapes constituent des moyens de fixation plus performants.

Pour autoriser une tolérance dans la fabrication de la structure de bord et du module de plancher sans pour autant empêcher la fixation de l'un à l'autre, on prévoit que, pour deux chapes venant coopérer ensembles, l'une présente un oeil de forme oblongue. On résout ainsi un cas de décalage des chapes lors du montage. Dans le cas des doubles chapes, on prévoit que les deux ensembles de chapes venant coopérer ensembles pour fixer le module de plancher ont chacun un oeil de forme oblongue, l'un selon un axe horizontal et l'autre selon un axe vertical. On compense ainsi une excentricité selon toutes les directions du plan des chapes.

Selon un autre mode d'introduction, on prévoit que le module de plancher est introduit par translation, typiquement selon l'axe longitudinal de l'aéronef, en position inclinée autour de l'axe longitudinal de l'aéronef, et donc par rapport au plan horizontal, de sorte à amener au moins un moyen de fixation prévu sur le module de plancher à la même hauteur, selon l'axe longitudinal de la partie de fuselage, qu'un moyen de fixation correspondant prévu sur la structure de bord, puis le module de plancher est tourné autour de l'axe longitudinal de sorte à faire coopérer lesdits moyens de fixation.

Cette configuration permet d'introduire efficacement le module de plancher dans l'aéronef alors même que des éléments, par exemple liés à la présence d'équipements ou structures déjà montés, font obstacle à une insertion horizontale du module.

Une inclinaison classique pour l'introduction est de l'ordre de 45°. La fixation peut s'opérer par exemple par vissage-boulonnage des structures de bord et du module de plancher. Des chapes telles que décrites précédemment peuvent également être utilisées pour cet autre mode.

Afin d'optimiser encore le processus de montage des aéronefs, on envisage d'assembler un module de plancher déjà pré-équipé. Ainsi, on prévoit que ledit; module de plancher comprend une structure de plancher recouverte d'un revêtement de sol sur sa surface supérieure, et de reprises d'équipements, tels que des sièges, des blocs palonniers-freinage ou un pylône central de commande.

L'invention a également trait à un aéronef comprenant une partie de fuselage définissant un volume intérieur dudit aéronef et comprenant au moins une structure de bord interne, ladite structure de bord étant solidaire de ladite partie de fuselage, aéronef dans lequel ladite structure de bord comprend des moyens de fixation libres et adaptés à recevoir des moyens de fixation correspondant d'un module de plancher de sorte à fixer ce dernier à ladite partie de fuselage. Un tel aéronef est alors prêt à recevoir un module de plancher, par exemple selon les mécanismes évoqués ci-dessus.

On entend ici par "moyens de fixation libres" des moyens de fixation dépourvus d'éléments fixés. Ces moyens de fixation sont donc inutilisés à ce stade et "disponibles" à recevoir des moyens correspondant d'un élément tiers pour entraîner la fixation de cet élément tiers à la partie de fuselage.

Dans un mode de réalisation, ledit aéronef comprend un cadre de zone glace s'appuyant sur ladite structure de bord.

Dans un mode de réalisation, on prévoit que ledit aéronef comprend un moyen de compensation d'efforts longitudinaux (efforts en X) subis par ledit aéronef, par exemple en cas d'atterrissage forcé, ledit moyen de compensation reliant ladite structure de bord à un élément de la partie de fuselage, comme par exemple un élément de cadre. A titre d'exemple, des bielles ou manilles de traction ou de compression, également appelée "de crash", peuvent être prévues à cet effet. Ces manilles ou bielles absorbent une grande part des chocs et efforts résultant ici de l'atterrissage forcé.

Dans un mode de réalisation, la structure de bord comprend une ferrure horizontale supportant un moyen de fixation, une âme supérieure et une âme inférieure, toutes deux solidaires de ladite ferrure de sorte à former un caisson. On obtient ainsi un renfort en cisaillement de la simple ferrure.

En alternative, la structure de bord comprend une ferrure horizontale supportant un moyen de fixation, une seule âme supérieure solidaire dudit moyen de fixation de sorte à former une structure de bordure semi-caissonnée.

Quelle que soit l'alternative, la ferrure peut être munie à une extrémité libre d'une double chapes à oeil officiant comme moyen de fixation, l'autre extrémité étant généralement fixée au fuselage.

Dans ces deux alternatives, on peut prévoir que lesdites âmes comprennent des ouvertures. Ces ouvertures permettent notamment de faire passer des câbles ou de réaliser une ventilation.

De façon optionnelle, ledit aéronef peut comprendre des moyens se rapportant aux caractéristiques de procédé présentées ci-dessus.

D'autres particularités et avantages de l'invention apparaîtront encore dans la description ci-après, illustrée par les dessins ci-joints, dans lesquels :
- la **figure 1** représente une structure d'aéronef apte à recevoir un plancher modulaire selon l'invention;
- la **figure 2** est une vue intérieure de la même structure d'aéronef équipée d'un plancher modulaire installé conformément à l'invention;
- la **figure 3** représente un détail de la **figure 2** montrant un exemple de fixation du plancher modulaire à la structure d'aéronef;
- la **figure 4** illustre un premier exemple d'installation dudit plancher modulaire de la **figure 2****;**
- la **figure 5** illustre un deuxième exemple d'installation du plancher modulaire de la **figure 2****;** et
- la **figure 6** est un détail des moyens de fixation du plancher à la structure d'aéronef.

La présente description a trait à l'aménagement d'un aéronef en cours de construction à l'aide d'un plancher modulaire généralement pré-équipé.

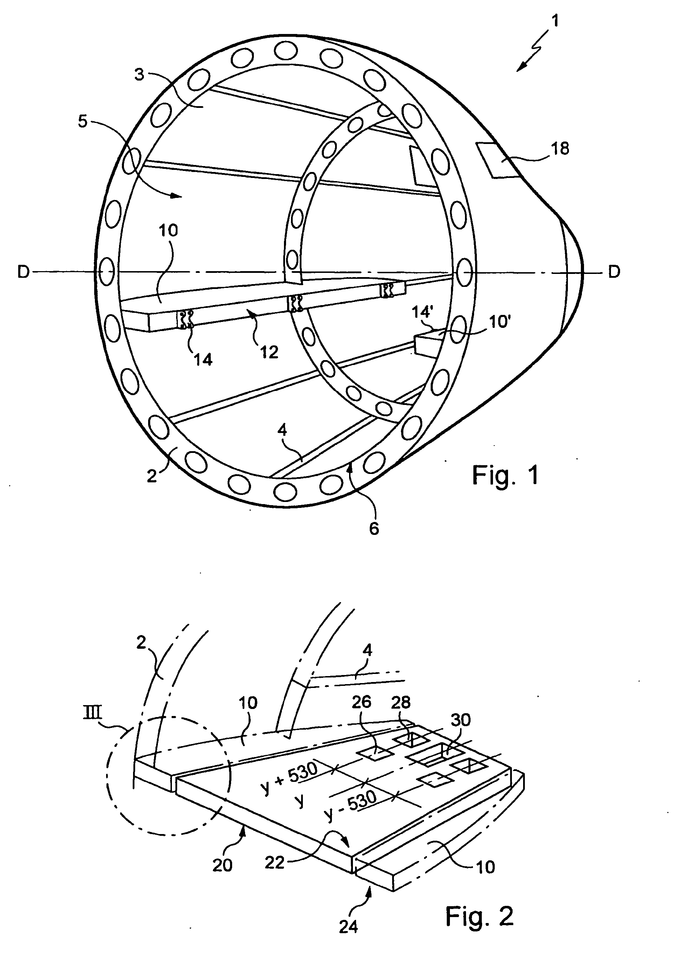

La **figure 1** représente un aéronef, ici un avion, en cours de construction, sur laquelle on distingue une partie avant 1 correspondant au nez de l'aéronef, laquelle partie avant 1 sera, dans une étape ultérieure de construction, rendue solidaire du reste de l'aéronef.

Cette partie avant 1 comprend une armature formée d'éléments de cadre 2 définissant sensiblement la section de l'avion à leurs emplacements, cette armature étant recouverte d'une peau 3 de sorte à former une partie du fuselage de l'aéronef. Des lisses horizontales 4 rigidifiant ledit fuselage sont également prévues entre les éléments de cadre 2.

Cette partie de fuselage avant 1 forme ainsi un volume interne 5 de l'aéronef, en l'occurrence l'espace cockpit, dont l'ouverture 6 est grossièrement circulaire ou ovale.

La partie avant 1 comprend également, dans un plan horizontal légèrement sous le plan diamétral horizontal D-D (c'est-à-dire selon une corde horizontale sous le diamètre), des caissons de bordure 10, 10', ici au nombre de deux, disposés de chaque côté du fuselage en son intérieur. Ces caissons 10 s'étendent ainsi de la paroi latérale du fuselage vers l'intérieur du volume défini par celui-ci sur une partie seulement de la corde horizontale.

Ces caissons de bordure 10, 10' sont rendus solidaires des cadres 2, lisses 4 et peau 3 du fuselage par des moyens classiques, tels que le collage, la soudure et/ou le rivetage. Ils épousent, d'un côté, la forme du fuselage et sont par exemple rectilignes de l'autre.

Sur la tranche rectiligne 12 de ces caissons de bordure 10, 10', on prévoit plusieurs moyens de fixation 14, 14', ici des doubles chapes en position verticale présentant dans les parties supérieure et inférieure deux oreilles comportant un oeil. Ces doubles chapes à oeil sont aptes à recevoir des moyens de fixation complémentaires 16, 16'.

On pourrait en variante prévoir plusieurs caissons de chaque côté de l'aéronef, chacun portant un moyen de fixation 14.

Les deux caissons de bordure 10, 10' définissent ainsi, dans leur plan commun, une zone 11 dans laquelle on peut venir insérer et fixer un module amovible de plancher 20 comme décrit ci-après.

En l'absence d'un tel module 20, les moyens de fixation 14, 14' sont libres et le nez 1 de l'aéronef présente un espace interne 5 vide et propice à un aménagement intérieur sans gêne.

Sur la **figure 2****,** on a représenté la partie avant 1 intérieure de l'aéronef, cette fois-ci équipée d'un module de plancher cockpit 20 formé essentiellement d'une structure. Dans cette configuration, les surfaces supérieures des caissons latéraux 10 et du module de plancher 20 sont coplanaires de sorte à définir le sol 22 du cockpit de l'aéronef dans toute la largeur du fuselage.

Les épaisseurs des caissons latéraux 10 et du module de plancher 20 sont ici sensiblement égales. Ainsi, la surface inférieure 24 de l'ensemble délimite de façon régulière un espace de soute à aménager.

Le module de plancher 20 peut être pré-équipé avant son installation dans le nez 1 de l'aéronef. Il est en effet plus aisé d'effectuer l'intégration d'équipements sur le plancher à l'extérieur du fuselage de l'aéronef, plutôt que dans le volume restreint défini par celui-ci.

Dans l'exemple de la **figure 2****,** le module de plancher 20 comprend des équipements de reprises de sièges 26 respectant les normes d'intégration (ici ± 530 mm de part et d'autre de l'axe central), les blocs palonniers-freinage 28 et le pylône central 30 de commandes.

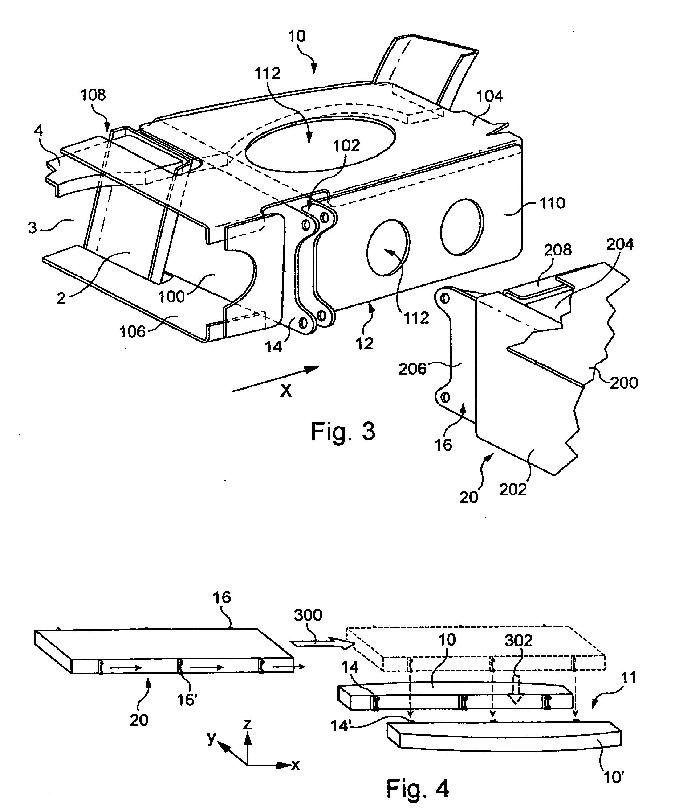

En référence maintenant à la **figure 3****,** on décrit un exemple de caisson de bordure 10 et de structure de module de plancher 20, ainsi que les éléments assurant la fixation de l'un à l'autre.

Le caisson de bordure 10 présente une structure comprenant plusieurs ferrures 100 qui s'étendent depuis le fuselage vers l'intérieur de l'aéronef et sont fixées au fuselage de l'aéronef, toutes dans un même plan horizontal. Ici, la ferrure 100 est fixée à la fois à un élément de cadre 2 et à un longeron ou lisse 4 du fuselage.

La ferrure 100 est prévue en alliage léger forgé et ré-usiné. Elle est mise à longueur du côté du revêtement 3 de sorte que la distance entre son extrémité 102 et l'extrémité d'une ferrure correspondante 102' prévue sur le caisson de bordure opposé 10' corresponde sensiblement à la largeur du plancher modulaire 20 à installer dans le même plan.

Les extrémités 102, 102' des ferrures 100, 100' se terminent en double chapes femelles à oeil 14, 14' comme représentées sur la figure 2.

Des ferrures symétriques par rapport à leur plan médian horizontal ainsi que la mise à longueur des ferrures 100, 100' permettent d'utiliser un même type de ferrure pour les caissons 10, 10' des deux côtés de l'aéronef.

Chaque caisson 10 est, ici, formé de deux âmes métalliques sensiblement horizontales 104 et 106 déposées respectivement sur et sous la structure de caisson 10 formée de la pluralité de ferrures 100. L'âme supérieure 104 est en particulier fixée à une lisse 4 et aux différentes ferrures 100 de ce côté du fuselage. Des encoches 108 appropriées sont prévues pour épouser la forme des cadres 2. L'âme inférieure 106 est fixée uniquement aux ferrures 100. Ces âmes 104 et 106 renforcent la tenue du caisson 10 aux efforts de type cisaillement.

La tranche 12 du caisson 10 est formée par une ou plusieurs plaques sensiblement verticales 110 fixées sur des lèvres repliées à 90° des deux âmes 104 et 106.

Les âmes 104, 106 et plaque 110 sont pourvues d'ouvertures 112 permettant le passage de câbles ou tuyaux, et évitant une différence de pression entre l'intérieur du caisson 10 et le cockpit.

Dans le cas des **figures 2** et **3****,** les caissons de bordure 10, 10' sont prévus dans le cockpit de l'aéronef. Les deux caissons 10 et 10' servent d'appui des cadres de la zone glace 18 afin de compenser l'interruption des cadres 2 du fuselage du fait de la présence des glaces 18.

Notamment, les cadres de la zone glace sont encastrés par fixations mécaniques sur des traverses ou ferrures du caisson de plancher, et sont semi-encastrés, également par fixations mécaniques (boulons ou rivets, par exemple) sous l'entablement horizontal qui longe le bord inférieur des glaces et sert d'appui local à ces dernières.

Pour décharger le caisson 10 d'efforts importants selon l'axe longitudinal X de l'aéronef, par exemple en cas d'atterrissage forcé, on prévoit des bielles ou manilles de traction ou de compression dites également « de crash », reliant le caisson 10 au fuselage, par exemple à un cadre 2 ou à une lisse 4.

Le module de plancher 20 du poste de pilotage avant (ou cockpit) est de dimension prédéfinie. Comme indiqué supra, on adapte les dimensions des caissons de bordure 10, 10' aux dimensions du module de plancher 20. Ce peut être réalisé en augmentant ou diminuant la longueur de la ferrure 100 et en adaptant en conséquence les âmes 104 et 106 ainsi que la plaque 110. De préférence, les deux ferrures 100 se faisant face dans les caissons 10 et 10' ont la même longueur de sorte à permettre un centrage du module de plancher 20 dans le plan horizontal correspondant.

Le plancher 20 peut donc être utilisé de manière standard sur un ensemble d'aéronefs de types différentes autour d'un invariant "système" comprenant, par exemple, les reprises de sièges 26, les blocs palonniers-freinage 28 et le pylône central 30.

Le module de plancher 20 présente une structure composite formée d'une ossature de traverses 202 et de longerons 204 de nature, par exemple, tout carbone, thermoplastique ou thermodur avec quelques ferrures métalliques de liaison structurale ou de supports systèmes. La structure est, ici, recouverte d'un panneau plancher 200 fixé à elle et est fermée sur la tranche par des plaques métalliques 208.

Le module de plancher 20 comprend également des ferrures 206 à double chapes mâles 16, 16' en alliage léger forgé ré-usiné a *minima,* c'est-à-dire que les ébauches forgées des chapes 16, 16' sont usinées uniquement au droit des surfaces venant en contact ou en vis-à-vis des autres pièces (chapes 14, 14') afin de minimiser les opérations d'usinage et les risques de vrillage des pièces lors de ces opérations. Les ferrures 206 sont placées à l'intérieur des traverses 202 en leur extrémité. On note ici que les traverses 202 et les ferrures 100, 100' des caisson de bordure 10, 10' sont prévues pour se faire face (et donc se trouver coplanaires) dans la position finale de pose du module de plancher 20 à l'intérieur de l'aéronef.

Les doubles chapes mâles 16 et femelles 14 sont prévues pour coopérer de sorte à permettre la fixation du plancher modulaire 20 sur le caisson de bordure 10.

La fixation des deux éléments peut notamment être réalisée par liaison par axes de cisaillement avec jeu axial et contre-perçage des chapes 16 du module de plancher 20 en se servant des chapes 14 du caisson de bordure 10 comme support de canons de perçage de sorte à former les oeils des chapes 16, lesdits canons étant ensuite remplacés par des bagues ou des entretoises de même épaisseur pour un montage serré sur une seule oreille de chaque liaison.

Ainsi le caisson 10 absorbe une partie des efforts de flexion/torsion nécessaires à la fixation et au support du plancher 20 repris par les doubles chapes femelles 14.

En référence à la **figure 4****,** on présente un premier mode d'installation du module de plancher 20 à l'intérieur de l'aéronef 1.

On introduit le module de plancher 20 éventuellement pré-équipé en position horizontale par l'ouverture 6 prévue à l'arrière du nez de l'aéronef, par une translation 300 selon l'axe longitudinal. On réalise cette translation selon un plan horizontal décalé verticalement par rapport à celui des caissons 10 et 10'. En effet, on ne peut introduire le plancher 20 dans le même plan que les caissons 10, 10' car les doubles chapes 14, 14', 16, 16' s'entrechoqueraient. On positionne le plancher sensiblement dans l'alignement des bords 12 des caissons 10, 10'.

L'insertion est de préférence réalisée avec le module de plancher 20 dans un plan au-dessus des caissons 10', sensiblement à hauteur du plan diamétral D-D', là où la largeur de fuselage est la plus importante, limitant ainsi la gêne occasionnée par d'éventuels obstacles.

Par cette translation 300 selon l'axe X, on amène le module de plancher 20 au-dessus de l'espace vide 11 entre les deux caissons 10, 10' avec notamment les doubles chapes 14 (14') en vis-à-vis des doubles chapes 16 (16').

Un déplacement vertical 302 selon l'axe Z est alors effectué pour amener le module de plancher 20 dans le même plan que les caissons 10, 10'. Les doubles chapes 16, 16' s'engagent alors dans les doubles chapes 14, 14' libres des caissons en attente. On fixe celles-ci ensemble comme évoqué précédemment de sorte à assurer la fixation du module de plancher 20 aux caissons 10, 10'.

On recouvre l'ensemble ainsi formé d'un revêtement de plancher 200 si nécessaire.

Différentes formes du module de plancher 20 dans le plan horizontal peuvent être envisagées. D'une part, une forme rectangulaire (le cas de la **figure 4**) est de réalisation simple. Dans ce cas, les bordures 12 des caissons 10, 10' sont parallèles.

En variante, le module de plancher 20 peut être de forme trapézoïdale (**figure 3**), le plus petit côté parallèle étant, par exemple, du côté opposé à l'ouverture 6. Dans cette variante, la forme adoptée répond notamment au rétrécissement du nez 1 de l'aéronef.

On note également qu'une telle forme peut permettre une insertion plus facile dans la zone vide 11 puisque la largeur disponible à l'ouverture est plus large que la partie introduite en premier. Une telle insertion coplanaire avec les caissons 10, 10' peut être prévue si les moyens de fixation 14, 16 ne sont pas proéminents des caissons 10 et du module de plancher 20.

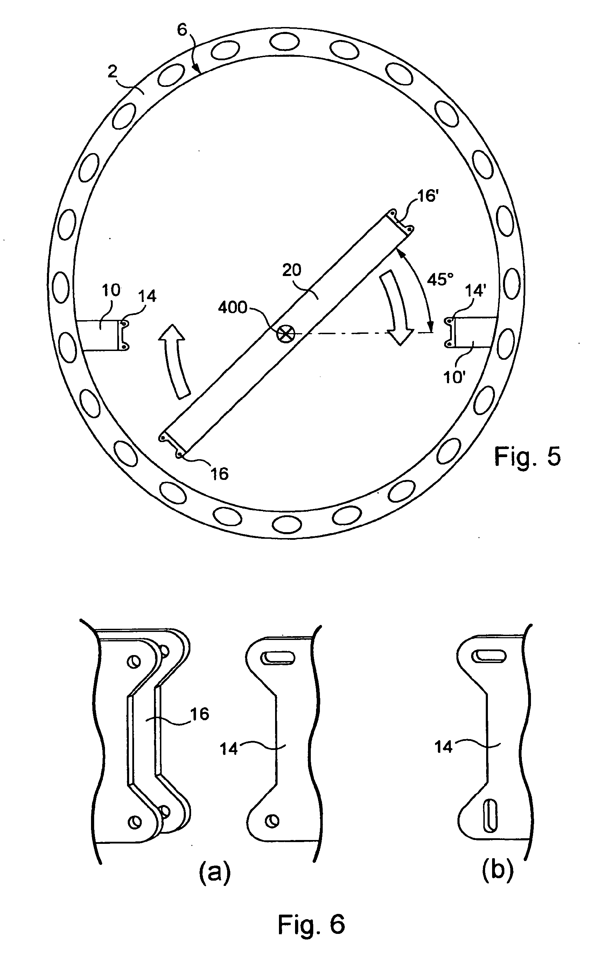

La **figure 5** illustre un second mode de réalisation pour l'installation du module de plancher 20 à l'intérieur 5 de l'aéronef 1.

On introduit le module de plancher 20, éventuellement pré-équipé, par translation selon l'axe longitudinal X de l'aéronef, l'axe central 400 du plancher étant de préférence sensiblement à hauteur des caissons 10, 10' et au milieu de l'espace vide 11 entre eux deux.

Lors de cette translation, le module de plancher 20 est incliné par rapport à l'horizontale et autour de l'axe longitudinal de l'avion, par exemple d'un angle de 45°. On translate ainsi le module de plancher 20 jusqu'à hauteur des caissons 10, 10', de telle sorte que les doubles chapes correspondantes 14-16 et 14'-16' soient à la même hauteur selon l'axe longitudinal, c'est-à-dire dans un même plan vertical (YZ) perpendiculaire à l'axe longitudinal.

On effectue ensuite une rotation du module de plancher 20 autour de l'axe 400 pour le placer à l'horizontale, les chapes 16, 16' s'engageant dans les chapes correspondantes 14, 14'.

On fixe alors le module de plancher 20 aux caissons 10, 10' à l'aide d'entretoises selon les mécanismes présentés ci-dessus.

La **figure 6** illustre une amélioration des moyens de fixation 14, 14', 16, 16' sous forme de doubles chapes. Cette amélioration autorise alors une tolérance des mises à dimension des ferrures 100, 100' et de la planéité relative des caissons 10 et 10'.

Sur la **figure 6a****,** on prévoit que l'un des oeils des doubles chapes 16, 16' du plancher 20 est de forme oblongue, soit selon l'axe horizontal, soit selon l'axe vertical, selon le type de défaut à corriger.

Sur la **figure 6b****,** les deux oeils des doubles chapes 16, 16' sont de forme oblongues, l'un selon l'axe horizontal, l'autre selon l'axe vertical afin d'assurer une reprise de tolérance dans deux directions.

Les exemples qui précèdent ne sont que des modes de réalisation de l'invention qui ne s'y limite pas.

En particulier, il a été présenté un module de plancher 20 de cockpit. Il est cependant envisagé un module de plancher arrière adapté à la géométrie de l'aéronef, les caissons de bordure 10, 10' conservant alors un porte-à-faux raisonnable et étant adaptés à la structure arrière de l'aéronef considéré. On peut aussi appliquer les mécanismes de l'invention à un module de plancher central pour cabine passagers.

Par ailleurs, les chapes de fixation 14 ou 16 peuvent être en retrait des bordures ou tranches 12, 208 respectives du caisson 10 et du module de plancher 20. On minimise ainsi l'espace vide entre ces deux éléments lorsqu'ils sont fixés entre eux.

Egalement, en alternative aux caissons 10, on peut prévoit des structures de bordure semi-caissonnées à une seule âme supérieure 104 ou des structures avec un treillis de raidissement.

En alternative au module de plancher 20 à structure composite, on peut aussi prévoir une structure métallique présentant la même architecture générale de longerons et traverses.

## Revendications

1. Procédé d'aménagement d'un aéronef comprenant une partie de fuselage (1) formée de cadres et de lisses horizontales, et définissant un volume intérieur (5) dudit aéronef, comprenant également au moins une structure de bord interne (10, 10'), ladite structure de bord étant rendue solidaire de ladite partie de fuselage et étant adaptée à recevoir un module de plancher (20), le procédé comprenant:
- une étape d'introduction (300) du module de plancher à l'intérieur dudit volume, ledit module de plancher (20) ayant des dimensions prédéfinies,
- une étape de fixation du module de plancher à ladite structure de bord, et
- une étape de mise à dimension de ladite structure de bord (10, 10') de sorte à occuper l'espace laissé libre entre ladite partie de fuselage et le module de plancher dans sa position de fixation.

2. Procédé selon la revendication 1, dans lequel le module de plancher (20) est introduit (300) horizontalement par translation de sorte à amener au moins un moyen de fixation (16, 16') prévu sur le module de plancher (20) à l'aplomb d'un moyen de fixation (14, 14') correspondant prévu sur la structure de bord (10, 10'), puis le module de plancher est déplacé (302) selon l'axe vertical de sorte à faire coopérer lesdits moyens de fixation.

3. Procédé selon la revendication 1, dans lequel le module de plancher (20) est introduit par translation en position inclinée autour de l'axe longitudinal de l'aéronef, de sorte à amener au moins un moyen de fixation (16, 16') prévu sur le module de plancher à la même hauteur, selon l'axe longitudinal de la partie de fuselage, qu'un moyen de fixation (14, 14') correspondant prévu sur la structure de bord (10> 10'), puis le module de plancher est tourné autour de l'axe longitudinal (400) de sorte à faire coopérer lesdits moyens de fixation.

4. Procédé selon la revendication 2 ou 3, dans lequel ledit moyen de fixation (16, 16') prévu sur le module de plancher (20) comprend une ferrure (206) à chape disposée à l'intérieur d'une traverse (202) formant une structure dudit module (20), en l'extrémité de ladite traverse, et ledit moyen de fixation (14, 14') prévu sur la structure de bord (10, 10') comprend une ferrure (100) à chape solidaire dudit fuselage (1) et apte à coopérer avec ladite chape de la structure de plancher.

5. Procédé selon la revendication précédente, dans lequel lesdites ferrures (100, 206) comprennent deux chapes symétriques par rapport à un plan médian de symétrie des ferrures.

6. Procédé selon l'une des revendications précédentes, dans lequel ledit module de plancher (20) est de forme trapézoïdale et ladite introduction est réalisée en introduisant d'abord le plus petit côté parallèle du module de plancher à l'intérieur dudit volume.

7. Procédé selon l'une des revendications précédentes, dans lequel ledit module de plancher (20) et la structure de bord (10, 10') sont agencés pour former, en position de fixation, une surface supérieure (104, 22) sensiblement plane.

8. Procédé selon l'une des revendications 1 à 7, dans lequel la structure de bord (10, 10') comprend une ferrure horizontale (100) rendue solidaire dudit fuselage (1) et supportant un moyen de fixation (14, 14') pour recevoir le module de plancher (20), et au moins une âme supérieure (104) solidaire de ladite ferrure (100) de sorte à former une structure de bordure au moins semi-caissonnée.

9. Procédé selon la revendication 8, dans lequel lesdites âmes (104, 106) comprennent des ouvertures (112) aptes au passage de câbles ou fournissant une ventilation.

10. Procédé selon l'une des revendications précédentes, dans lequel ledit module de plancher comprend une structure de plancher recouverte d'un revêtement de sol sur sa surface supérieure, et de reprises d'équipements.

## Claims

1. A method for equipping an aircraft comprising a fuselage part (1) formed from frames and horizontal stringers and defining an interior space (5) of the said aircraft, also comprising at least one internal edge structure (10, 10'), the said edge structure being fastened to the said fuselage part and being adapted to receive a floor module (20), the method comprising:
- a step of introducing (300) the floor module into the said space, said floor module (20) having predefined dimensions,
- a step of fixing the floor module to the said edge structure, and
- a step of dimensioning said edge structure (10, 10') in such a way as to occupy the space left free between the said fuselage part and the floor module in its fixing position.

2. A method according to claim 1, wherein the floor module (20) is introduced (300) horizontally by translation in such a way as to bring at least one fixing means (16, 16') provided on the floor module (20) straight above a corresponding fixing means (14, 14') provided on the edge structure (10, 10'), then the floor module is displaced (302) along the vertical axis in such a way that the said fixing means are made to cooperate.

3. A method according to claim 1, wherein the floor module (20) is introduced by translation in a position inclined around the longitudinal axis of the aircraft, in such a way as to bring at least one fixing means (16, 16') provided on the floor module to the same distance, along the longitudinal axis of the fuselage part, as a corresponding fixing means (14, 14') provided on the edge structure (10, 10'), then the floor module is turned around the longitudinal axis (400) in such a way that the said fixing means are made to cooperate.

4. A method according to claim 2 or 3, wherein the said fixing means (16, 16') provided on the floor module (20) comprises a clevis bracket (206) disposed inside a crosspiece (202) forming a structure of the said module (20), at the end of the said crosspiece, and the said fixing means (14, 14') provided on the edge structure (10, 10') comprises a clevis bracket (100) fastened to the said fuselage (1) and capable of cooperating with the said clevis bracket of the floor structure.

5. A method according to the preceding claim, wherein the said brackets (100, 206) comprise two clevises which are symmetrical relative to a median plane of symmetry of the said brackets.

6. A method according to one of the preceding claims, wherein the said floor module (20) is of trapezoidal shape and the said introduction is carried out by first of all introducing the shortest parallel side of the floor module into the said volume.

7. A method according to one of the preceding claims, wherein the said floor module (20) and the edge structure (10, 10') are arranged to form a substantially plane upper surface (104, 22) in fixing position.

8. A method according to one of claims 1 to 7, wherein the edge structure (10, 10') comprises a horizontal bracket (100) fastened to the said fuselage (1) and supporting a fixing means (14, 14') for receiving the floor module (20), and at least one upper web (104) fastened to the said bracket (100) in such a way as to form an edge structure of at least semi-box form.

9. A method according to claim 8, wherein the said webs (104, 106) comprise apertures (112), suitable for the passage of cables or providing ventilation.

10. A method according to one of the preceding claims, wherein the said floor module comprises a floor structure covered with a floor lining on its upper surface and with supports for equipment items.

## Patentansprüche

1. Verfahren zum Ausstatten eines Luftfahrzeugs, das ein Rumpfteil (1) aufweist, welches aus Spanten und horizontalen Stringern gebildet ist und einen Innenraum (5) des Luftfahrzeugs definiert, sowie zumindest eine innere Randstruktur (10, 10'), wobei die Randstruktur fest mit dem Rumpfteil verbunden ist und dazu geeignet ist, ein Bodenmodul (20) aufzunehmen, wobei das Verfahren umfasst:
- einen Schritt (300) des Einführens des Bodenmoduls in das Innere des Raums, wobei das Bodenmodul (20) vorbestimmte Abmessungen hat,
- einen Schritt des Befestigens des Bodenmoduls an der Randstruktur, und
- einen Schritt des Dimensionierens der Randstruktur (10, 10') derart, dass der zwischen dem Rumpfteil und dem Bodenmodul in dessen Befestigungsstellung freigelassene Zwischenraum eingenommen wird.

2. Verfahren nach Anspruch 1,
wobei das Bodenmodul (20) horizontal durch Einschieben derart eingeführt wird (300), dass zumindest ein am Bodenmodul (20) vorgesehenes Befestigungsmittel (16, 16') in Flucht mit einem entsprechenden Befestigungsmittel (14, 14') gebracht wird, das an der Randstruktur (10, 10') vorgesehen ist, wonach das Bodenmodul entlang der vertikalen Achse derart verlagert wird (302), dass die beiden Befestigungsmittel zum Zusammenwirken gebracht werden.

3. Verfahren nach Anspruch 1,
wobei das Bodenmodul (20) durch Einschieben in einer um die Längsachse des Luftfahrzeugs geneigten Stellung eingeführt wird, so dass zumindest ein am Bodenmodul vorgesehenes Befestigungsmittel (16, 16') entlang der Längsachse des Rumpfteils auf gleiche Höhe wie ein entsprechendes Befestigungsmittel (14, 14') gebracht wird, das an der Randstruktur (10, 10') vorgesehen ist, wonach das Bodenmodul um die Längsachse (400) derart gedreht wird, dass die beiden Befestigungsmittel zum Zusammenwirken gebracht werden.

4. Verfahren nach Anspruch 2 oder 3,
wobei das am Bodenmodul (20) vorgesehene Befestigungsmittel (16, 16') einen Abdeckungsbeschlag (206) aufweist, der innerhalb eines Querträgers (202), der einen Aufbau des Moduls (20) bildet, am Ende des Querträgers angeordnet ist, und wobei das an der Randstruktur (10, 10') vorgesehene Befestigungsmittel (14, 14') einen Abdeckungsbeschlag (100) aufweist, der fest mit dem Rumpf (1) verbunden und dazu geeignet ist, mit der Abdeckung der Bodenstruktur zusammenzuwirken.

5. Verfahren nach dem vorhergehenden Anspruch,
wobei die Beschläge (100, 206) zwei bezüglich einer Symmetriemittelebene der Beschläge symmetrisch verlaufende Abdeckungen aufweisen.

6. Verfahren nach einem der vorhergehenden Ansprüche,
wobei das Bodenmodul (20) trapezförmig ausgebildet ist und das Einführen dadurch erfolgt, dass zunächst die kleinere Parallelseite des Bodenmoduls in das Innere des Raums eingeführt wird.

7. Verfahren nach einem der vorhergehenden Ansprüche,
wobei das Bodenmodul (20) und die Randstruktur (10, 10') dazu vorgesehen sind, in Befestigungsstellung eine im Wesentlichen ebene obere Fläche (104, 22) zu bilden.

8. Verfahren nach einem der Ansprüche 1 bis 7,
wobei die Randstruktur (10, 10') einen horizontalen Beschlag (100) aufweist, der fest mit dem Rumpf (1) verbunden ist und ein Befestigungsmittel (14, 14') trägt, um das Bodenmodul (20) aufzunehmen, sowie zumindest einen oberen Steg (104), der fest mit dem Beschlag (100) verbunden ist, so dass eine zumindest halb geschlossene Umrandungsstruktur gebildet wird.

9. Verfahren nach Anspruch 8,
wobei die Stege (104, 106) Öffnungen (112) aufweisen, die für den Durchtritt von Kabeln geeignet sind oder eine Lüftung bereitstellen.

10. Verfahren nach einem der vorhergehenden Ansprüche,
wobei das Bodenmodul eine Bodenstruktur, die an ihrer oberen Fläche von einem Bodenbelag überdeckt ist, und Ausrüstungsaufnahmemittel aufweist.
